(19) Europäisches Patentamt / European Patent Office / Office européen des brevets

(11) **EP 3 235 164 B1**

(12) **EUROPÄISCHE PATENTSCHRIFT**

(45) Veröffentlichungstag und Bekanntmachung des Hinweises auf die Patenterteilung:
**22.04.2020   Patentblatt 2020/17**

(21) Anmeldenummer: **15820818.1**

(22) Anmeldetag: **15.12.2015**

(51) Int Cl.:
***H04L 9/08*** *(2006.01)*

(86) Internationale Anmeldenummer:
**PCT/EP2015/002583**

(87) Internationale Veröffentlichungsnummer:
**WO 2016/096148 (23.06.2016 Gazette 2016/25)**

(54) **VERFAHREN ZUM PSEUDONYMEN VEREINBAREN EINES SCHLÜSSELS ZWISCHEN EINEM PORTABLEN DATENTRÄGER UND EINEM TERMINAL**

METHOD FOR A PSEUDONYMOUS KEY-AGREEMENT BETWEEN A PORTABLE DATA CARRIER AND A TERMINAL

PROCÉDÉ POUR CONVENIR DE MANIÈRE PSEUDONYME D'UNE CLÉ ENTRE UN SUPPORT D'INFORMATIONS PORTABLE ET UN TERMINAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2014   DE 102014019067**

(43) Veröffentlichungstag der Anmeldung:
**25.10.2017   Patentblatt 2017/43**

(73) Patentinhaber: **Giesecke+Devrient Mobile Security GmbH 81677 München (DE)**

(72) Erfinder: **URIAN, Rainer 86157 Augsburg (DE)**

(56) Entgegenhaltungen:
**WO-A1-2013/007686**

- **MIROS AW KUTY OWSKI ET AL: "Restricted Identification Scheme and Diffie-Hellman Linking Problem", 27. November 2011 (2011-11-27), TRUSTED SYSTEMS, SPRINGER BERLIN HEIDELBERG, BERLIN, HEIDELBERG, PAGE(S) 221 - 238, XP047010555, ISBN: 978-3-642-32297-6 Seite 232 - Seite 234**

**Beschreibung**

Die Erfindung betrifft Verfahren zum pseudonymen Vereinbaren eines Schlüssels zwischen einem stationären und/ oder einem portablen Datenträger, vorzugsweise in Form eines Sicherheitsdokuments, und einem Terminal. Ferner betrifft die Erfindung einen entsprechend ausgestalteten portablen Datenträger sowie ein entsprechend ausgestaltetes Terminal.

Portable Datenträger werden vielfach als Sicherheitsdokumente verwendet, beispielsweise in Form eines Personalausweises, eines Reisepasses, einer Signaturkarte oder dergleichen. Dabei verfügen moderne Sicherheitsdokumente mittlerweile in der Regel über einen Speicher sowie einen Prozessor und sind dazu eingerichtet, Sicherheitsapplikationen auszuführen. Anwendungsbeispiele für solche Sicherheitsapplikationen sind eine Authentisierung gegenüber einem Terminal, die Herstellung eines gesicherten Datenkommunikationskanals, das elektronische Signieren von Daten sowie das Verifizieren von Signaturen und dergleichen. Auf diese Weise können solche Datenträger dazu eingesetzt werden, mit beliebigen Dienstanbietern zu interagieren, um sich beispielsweise für elektronische Transaktionen, z.B. über das Internet, zu authentisieren und diese auf gesicherte Weise durchzuführen. Weiter können die Sicherheitsdokumente zum Speichern von Daten, wie z.B. persönlichen und/oder sicherheitsrelevanten Daten sowie sonstigen Nutzdaten, eingesetzt werden und beispielsweise Zugangskontrollsysteme unterstützen.

Häufig verfügen als Sicherheitsdokument ausgestaltete portable Datenträger über eine geeignete Kommunikationsschnittstelle, beispielsweise eine RF- oder NFC-Kommunikationsschnittstelle, um kontaktlos mit einem Terminal kommunizieren zu können.

Ein solcher als Sicherheitsdokument ausgestalteter portabler Datenträger ist der neue deutsche Personalausweis (nPA) bzw. elektronische Personalausweis, bei dem unter anderem das Protokoll "Chip Authentication" (Chip Authentisierung, CA) zum Einsatz kommt. Dieses Protokoll dient dazu, eine gesicherte Verbindung zwischen einem portablen Datenträger und einem Terminal aufzubauen und einen "geklonten" Datenträger erkennen zu können. Das CA-Protokoll sieht vor, dass in jedem portablen Datenträger ein individuelles Schlüsselpaar hinterlegt ist, das aus einem privaten und einem öffentlichen Schlüssel besteht. Aus Datenschutzgründen, z.B. um das Tracking eines portablen Datenträgers unmöglich zu machen, handelt es sich bei dem Schlüssel des portablen Datenträgers in der Regel um einen Gruppenschlüssel, d.h. einen Schlüssel, der einer Gruppe von portablen Datenträgern gemein ist.

Beim CA-Protokoll wird der öffentliche Schlüssel zusammen mit einer Zufallszahl an das Terminal geschickt. Das Terminal erzeugt bei jedem Lesevorgang ebenfalls ein eigenes Schlüsselpaar, bestehend aus einem öffentlichen und einem privaten (geheimen) Schlüssel, und schickt seinen öffentlichen Schlüssel an den portablen Datenträger. Nun können sowohl der Datenträger als auch das Terminal jeweils mit ihrem eigenen privaten Schlüssel, dem öffentlichen Schlüssel des Kommunikationspartners und der Zufallszahl denselben geheimen Schlüssel berechnen. Dieser abgeleitete geheime Schlüssel sichert in der weiteren Kommunikation zwischen dem portablen Datenträger und dem Terminal die starke Verschlüsselung der zwischen dem Datenträger und dem Terminal übertragenen Daten.

Mit Hilfe des abgeleiteten geheimen Schlüssels kann nun das Terminal prüfen, ob der portable Datenträger den "richtigen" privaten Schlüssel besitzt. Ein "geklonter" portabler Datenträger kann den originalen privaten Schlüssel nicht besitzen. Würde er einfach einen anderen privaten Schlüssel benutzen, wäre das gemeinsame Geheimnis falsch. Wenn für einen "geklonten" Datenträger ein neues Schlüsselpaar erzeugt worden wäre, würde dies bei der passiven Authentisierung auffallen, da der öffentliche Schlüssel durch eine digitale Signatur gegen unbemerkte Veränderungen geschützt ist.

Eine weitere Option, die ein portabler Datenträger in Form eines nPAs bietet, ist dem Fachmann unter dem Begriff "Restricted Identification (RI)" bekannt. Das RI-Protokoll zwischen einem portablen Datenträger und einem Terminal dient zur Erzeugung von Pseudonymen, die spezifisch für den Chip des portablen Datenträgers und den Terminal-Sektor (z. B. alle Terminals eines Dienstanbieters) sind. Dadurch wird es einem (authentisierten) Terminal möglich, den Chip eines portablen Datenträgers basierend auf dem zuvor erhaltenen Pseudonym wiederzuerkennen, ohne personenbezogene Daten auszulesen. Dabei ist das RI-Protokoll so ausgestaltet, dass es nicht möglich ist, die Pseudonyme verschiedener Sektoren zu verketten.

Das Dokument XP47010555 beschreibt ein German Restricted Identification (RI) Protokoll.

Für weitere Details zum CA-Protokoll und zum RI-Protokoll wird auf die technische Richtlinie "BSI TR-03110 Technical Guideline Advanced Security Mechanisms for Machine Readable Travel Documents" des Bundesamt für Sicherheit in der Informationstechnik verwiesen (siehe https://www.bsi.bund.de/EN/Publications/TechnicalGuidelines/TR03110 / BSITR03110.html).

In der vorstehend erwähnten technischen Richtlinie wird beschrieben, wie das RI-Protokoll dazu verwendet werden kann, verlorengegangene oder gestohlene portable Datenträger zu widerrufen. Die Ausgestaltung des bekannten RI-Protokolls erlaubt es jedoch nicht, einen einzelnen portablen Datenträger zu widerrufen, falls dessen CA-Protokoll-Schlüssel kompromittiert worden ist. In diesem Fall kann der gesicherte CA-Kanal nicht mehr die korrekte Berechnung des Pseudonyms auf der Grundlage eines RI-Schlüssels des portablen Datenträgers garantieren. Falls ein Angreifer Kontrolle über den gesicherten CA-Kanal hat, kann dieser ohne weiteres ein beliebiges Pseudonym wählen. Er ist nicht dazu gezwungen, dieses mittels eines bekannten geheimen Schlüssels zu berechnen. Damit kann der Angreifer vorgeben, ein bestimmter echter portabler Datenträger zu sein, indem er dessen Pseudonym verwendet. Folglich müssen für den Fall, dass der CA-Protokoll-Schlüssel eines portablen Datenträgers kompromittiert worden ist, alle portablen Datenträger, die zu der Gruppe des kompromittierten Datenträgers gehören, d.h. als Schlüssel für das CA-Protokoll den gleichen Gruppenschlüssel verwenden, widerrufen werden, was offensichtlich wenig anwenderfreundlich ist.

Aufgabe der vorliegenden Erfindung ist es, dem vorstehenden Nachteil Rechnung zu tragen.

Diese Aufgabe wird durch Verfahren und Vorrichtungen mit den Merkmalen der nebengeordneten Ansprüche gelöst. Vorteilhafte Ausgestaltungen und Weiterbildungen sind in den abhängigen Ansprüchen angegeben.

Der Grundgedanke der vorliegenden Erfindung besteht darin, mittels einer Kombination des CA-Protokolls mit dem RI-Protokoll ein pseudonymes Diffie-Hellman-Protokoll (PDH-Protokoll) bereitzustellen. Erfindungsgemäß erfolgen das Bestimmen des Pseudonyms aus dem RI-Protokoll und das Ausbilden des gesicherten Kommunikationskanals aus dem CA-Protokoll im Wesentlichen parallel. Erfindungsgemäß wird ebenfalls ein Gruppenschlüssel für den CA-Teil des erfindungsgemäßen Protokolls verwendet. Aufgrund der Ausgestaltung des erfindungsgemäßen Protokolls ist es im Unterschied zu den bekannten Protokollen einem Angreifer, dem es gelingen sollte, den Gruppenschlüssel eines erfindungsgemäßen portablen Datenträgers zu ermitteln, nicht möglich, das Pseudonym eines anderen Benutzers zu erzeugen.

Auf der Basis dieses Grundgedankens wird gemäß einem ersten Aspekt der Erfindung ein Verfahren zum pseudonymen Vereinbaren eines Schlüssels Z zwischen einem stationären Datenträger und/ oder einem portablen Datenträger und einem Terminal bereitgestellt, wobei auf dem Terminal ein Basiselement J sowie die Gruppenelemente G1 und G2 vorliegen und auf dem portablen Datenträger ein öffentlicher Schlüssel PKC und die Geheimnisse s und t vorliegen, wobei u der diskrete Logarithmus von G2 zu der Basis G1 ist, d.h. $G2 = G1*u$, und wobei der öffentliche Schlüssel PKC eine aus den zwei Geheimnissen s und t und den zwei Gruppenelementen G1 und G2 ausgebildete diskret-logarithmische Darstellung ist, d.h. $PKC = G1*s + G2*t$. Dabei umfasst das Verfahren auf dem portablen Datenträger die folgenden Schritte: das Empfangen des Basiselements J und eines ersten abgeleiteten Basiselements H1 und eines zweiten abgeleiteten Basiselements H2 vom Terminal, wobei mittels einer ersten Zufallszahl r1 und einer zweiten Zufallszahl r2 das erste abgeleitete Basiselement H1 aus dem Basiselement J und dem Gruppenelement G1 abgeleitet ist und das zweite abgeleitete Basiselement H2 aus dem Gruppenelement G2 abgeleitet ist; das Berechnen eines Pseudonyms K mittels des vom Terminal übertragenen Basiselements J und des Geheimnisses s; das Senden des öffentlichen Schlüssels PKC und des Pseudonyms K an das Terminal; und das Berechnen eines gemeinsamen Geheimnisses Z mittels der abgeleiteten Basiselemente H1 und H2 und der Geheimnisse s und t, wobei als Schlüssel zwischen dem portablen Datenträger und dem Terminal das gemeinsame Geheimnis Z oder ein daraus abgeleiteter Schlüssel verwendet wird.

Gemäß der Erfindung kann es sich bei dem Datenträger um einen stationären Datenträger und/ oder einen portablen Datenträger handeln. Aus Gründen der Einfachheit der Beschreibung wird im Folgenden der Begriff "portabler Datenträger" verwendet.

Vorzugsweise wird das gemeinsame Geheimnis Z berechnet, indem $Z = H1*s + H2*t$ berechnet wird.

Gemäß einem zweiten Aspekt der Erfindung wird ein Verfahren zum pseudonymen Vereinbaren eines Schlüssels Z zwischen einem portablen Datenträger und einem Terminal bereitgestellt, wobei auf dem Terminal ein Basiselement J und die Gruppenelement G1 und G2 vorliegen und auf dem portablen Datenträger ein öffentlicher Schlüssel PKC und die Geheimnisse s und t vorliegen, wobei u der diskrete Logarithmus von G2 zu der Basis G1 ist, d.h. $G2 = G1*u$, und wobei der öffentliche Schlüssel PKC eine aus den zwei Geheimnissen s und t und den zwei Gruppenelementen G1 und G2 ausgebildete diskret-logarithmische Darstellung ist, d.h. $PKC = G1*s + G2*t$. Dabei umfasst das Verfahren auf dem Terminal die folgenden Schritte: das Erzeugen einer ersten Zufallszahl r1 und einer zweiten Zufallszahl r2; das Ableiten eines ersten abgeleiteten Basiselements H1 und eines zweiten abgeleiteten Basiselements H2, wobei mittels der ersten Zufallszahl r1 und der zweiten Zufallszahl r2 das erste abgeleitete Basiselement H1 aus dem Basiselement J und dem Gruppenelement G1 abgeleitet wird und das zweite abgeleitete Basiselement H2 aus dem Gruppenelement G2 abgeleitet wird; das Senden des Basiselements J, des ersten abgeleiteten Basiselements H1 und des zweiten abgeleiteten Basiselements H2 an den portablen Datenträger; das Empfangen des öffentlichen Schlüssels PKC und eines Pseudonyms K des portablen Datenträgers, wobei das Pseudonym K aus dem Basiselement J und dem Geheimnis s gebildet ist; und das Berechnen eines gemeinsamen Geheimnisses Z mittels des öffentlichen Schlüssels PKC, der ersten Zufallszahl r1, dem Pseudonym K und der zweiten Zufallszahl r2, wobei als Schlüssel zwischen dem portablen Datenträger und dem Terminal das gemeinsame Geheimnis Z oder ein daraus abgeleiteter Schlüssel verwendet wird.

Vorzugsweise wird das gemeinsame Geheimnis Z berechnet, indem $Z = (PKC*r1 + K)*r2$ berechnet wird.

Gemäß bevorzugter Ausführungsformen der Erfindung ist auf dem Terminal eine Positivliste mit dem Pseudonymen hinsichtlich des Basiselements J aller echten, bisher nicht widerrufenen portablen Datenträger hinterlegt.

Die nachstehend bevorzugten Ausführungsformen lassen sich sowohl im Rahmen des Verfahrens gemäß dem ersten Aspekt der Erfindung als auch im Rahmen des Verfahrensgemäß dem zweiten Aspekt der Erfindung vorteilhaft implementieren.

Gemäß bevorzugter Ausführungsform der Erfindung wird das erste abgeleitete Basiselement H1 abgeleitet, indem H1=(G1*r1+J)*r2 berechnet wird, und das zweite abgeleitete Basiselement H2 abgeleitet, indem H2=G2*r1*r2 berechnet wird.

Vorzugsweise wird das Pseudonym K berechnet, indem K=J*s berechnet wird.

Gemäß bevorzugter Ausführungsformen der Erfindung wird vom portablen Datenträger ein verschleiertes Pseudonym K' berechnet und an das Terminal gesendet. Vorzugsweise gilt für das verschleierte Pseudonym K'=K*r3, wobei r3 eine Zufallszahl ist.

Gemäß einem dritten Aspekt der Erfindung wird ein portabler Datenträger bereitgestellt, der dazu ausgestaltet ist, ein Verfahren gemäß dem ersten Aspekt der Erfindung durchzuführen. Vorzugsweise handelt es sich bei dem portablen Datenträger um ein Sicherheitsdokument.

Gemäß einem vierten Aspekt der Erfindung wird ein Terminal bereitgestellt, das dazu ausgestaltet ist, ein Verfahren gemäß dem zweiten Aspekt der Erfindung durchzuführen.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:

Figur 1    eine schematische Darstellung eines erfindungsgemäßen portablen Datenträgers in Kommunikation mit einem erfindungsgemäßen Terminal,

Figur 2    einen Ablauf der Kommunikation zwischen dem portablen Datenträger und dem Terminal von Figur 1 gemäß einer ersten bevorzugten Ausführungsform der Erfindung, und

Figur 3    einen Ablauf der Kommunikation zwischen dem portablen Datenträger und dem Terminal von Figur 1 gemäß einer zweiten bevorzugten Ausführungsform der Erfindung.

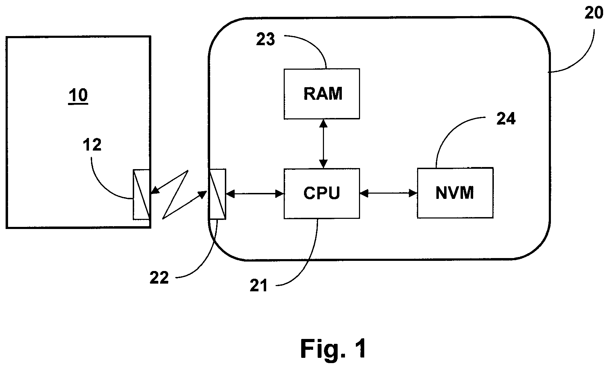

Figur 1 zeigt eine schematische Darstellung einer bevorzugten Ausführungsform eines erfindungsgemäßen portablen Datenträgers 20 in Form einer Chipkarte in Kommunikation mit einer externen Instanz in Form eines erfindungsgemäßen Terminals 10. Vorzugsweise handelt es sich bei dem portablen Datenträger 20 um ein Sicherheitsdokument, wie beispielsweise ein Personalausweis, ein Reisepass, eine Signaturkarte und dergleichen.

Der in Figur 1 dargestellte portable Datenträger 20 in Form einer Chipkarte ist dazu ausgestaltet mit dem Terminal 10 Daten auszutauschen. Als ein Austausch von Daten wird hier eine Signalübertragung, eine wechselseitige Steuerung und in einfachen Fällen auch eine Verbindung zwischen dem Terminal 10 und der Chipkarte 20 verstanden. In der Informationstheorie wird ein Datenaustausch insbesondere durch das Sender-Empfänger-Modell geprägt: Daten bzw. Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Daten dekodieren kann.

Zur Kommunikation zwischen der Chipkarte 20 und dem Terminal 10 weisen sowohl die Chipkarte 20 als auch das Terminal 10 geeignete Kommunikationsschnittstellen 22 und 12 auf. Die Schnittstellen 22 und 12 können beispielsweise so ausgestaltet sein, dass die Kommunikation zwischen diesen bzw. zwischen der Chipkarte 20 und dem Terminal 10 kontaktlos, d.h. über die Luftschnittstelle erfolgt, wie dies in Figur 1 durch den gezackten Pfeil angedeutet ist, beispielsweise über eine RF- oder NFC-Schnittstelle. Alternativ kann die Chipkarte 20 über die Schnittstelle 22 galvanisch, d.h. kontaktbehaftet, mit der Schnittstelle 12 des Terminals 10 verbunden werden. In diesem Fall ist die Schnittstelle 22 in der Regel als ein auf einer Seite der Chipkarte 20 angeordnetes Kontaktfeld mit Kontaktflächen zum Datenaustausch mit dem Terminal 10 ausgebildet. Selbstverständlich werden von der vorliegenden Erfindung auch portable Datenträger in Form von Chipkarten umfasst, die sowohl eine Schnittstelle zur kontaktbehafteten als auch eine Schnittstelle zur kontaktlosen Kommunikation mit einem Terminal aufweisen und die dem Fachmann als Dual-Interface-Chipkarten bekannt sind.

Neben der Schnittstelle 22 zur Kommunikation mit dem Terminal 10 umfasst die Chipkarte 20 eine zentrale Prozessor- bzw. Recheneinheit (CPU; auch Prozessor genannt) 21, die in Kommunikationsverbindung mit der Schnittstelle 22 steht. Bekanntermaßen gehören zu den primären Aufgaben des Prozessors 21 das Ausführen von arithmetischen und logischen Funktionen und das Lesen und Schreiben von Datenelementen, wie dies durch eine auf dem Prozessor 21 ablaufende Softwareapplikation definiert wird. Der Prozessor 21 steht ferner mit einem flüchtigen Arbeitsspeicher (RAM) 23 und einem nichtflüchtigen wieder beschreibbaren Speicher 24 (in Figur 1 als "NVM" (non-volatile memory) bezeichnet) in Verbindung. Vorzugsweise handelt es sich bei dem nichtflüchtigen Speicher 24 um einen Flash-Speicher (Flash-EEPROM). Dabei kann es sich beispielsweise um einen Flash-Speicher mit einer NAND- oder einer NOR-Architektur handeln. Neben einem wieder beschreibbaren Teil kann der nichtflüchtige Speicher 24 ferner einen ROM aufweisen.

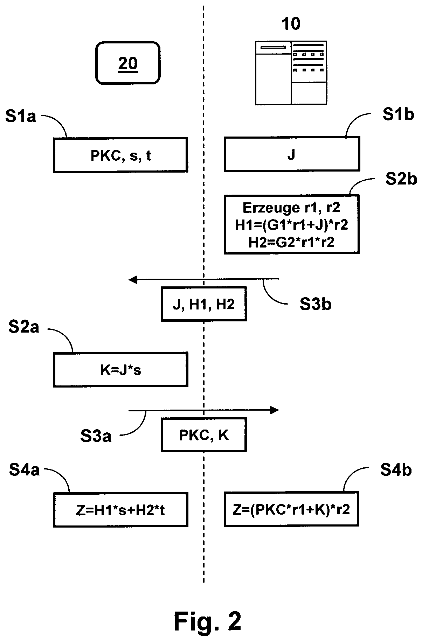

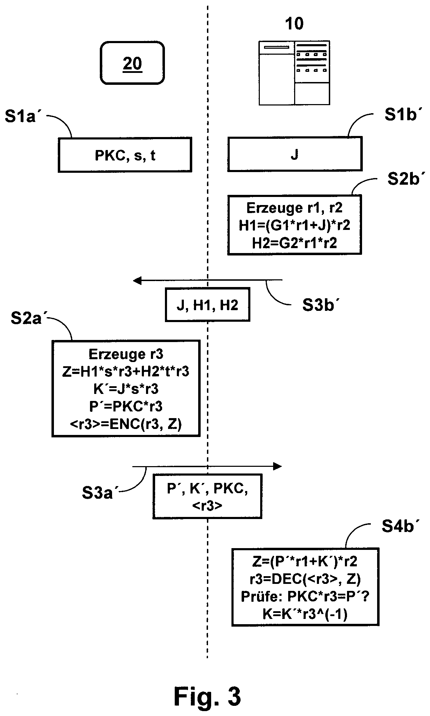

Bei der in Figur 1 dargestellten bevorzugten Ausführungsform ist in dem nichtflüchtigen Speicher 24 der Chipkarte 20 Programmcode gespeichert, der von dem Prozessor 21 ausgeführt werden kann. Insbesondere kann in dem nichtflüchtigen Speicher 24 der Chipkarte 20 Programmcode implementiert sein, durch den die Chipkarte 20 dazu ausgestaltet ist, das nachstehend im Zusammenhang mit den Figuren 2 und 3 beschriebene erfindungsgemäße Kommunikationsprotokoll mit dem Terminal 10 durchzuführen.

Wie bereits vorstehend erwähnt, baut die Erfindung auf dem bekannten CA-Protokoll und dem bekannten RI-Protokoll auf und kombiniert diese beiden Protokolle in einem gemeinsamen Protokoll auf vorteilhafte Weise. Die Schritte S1a und S1b von Figur 2 zeigen, welche Datenelemente zum Beginn des erfindungsgemäßen Protokolls auf dem vorzugsweise als Chipkarte ausgestalteten portablen Datenträger 20 bzw. dem Terminal 10 vorliegen, nämlich der öffentliche Schlüssel PKC und die zwei Geheimnisse s und t auf dem portablen Datenträger 20 und das aus dem RI-Protokoll bekannte Basiselement J auf dem Terminal 10.

Wie beim CA-Protokoll ist der öffentliche Schlüssel PKC des portablen Datenträgers 20 vorzugsweise ein Gruppenschlüssel, d.h. gilt für eine Gruppe von portablen Datenträgern 20. Erfindungsgemäß ist der öffentliche Schlüssel PKC des portablen Datenträgers 20 eine aus den zwei Geheimnissen s und t und zwei Gruppenelementen G1 und G2 ausgebildete diskret-logarithmische Darstellung ("discrete logarithmic representation"; DLREP), d.h. PKC = G1*s+G2 *t.

Wie der Fachmann erkennt, handelt es sich bei den in den Figuren 2 und 3 beschriebenen bevorzugten Ausführungsformen der Erfindung um Varianten des Diffie-Hellman-Protokolls (DH-Protokolls) unter Verwendung von Kryptographie mittels elliptischer Kurven (ECC; "Elliptic Curve Cryptography"). Die Implementierung des DH-Protokolls mittels elliptischer Kurven wird auch als "Elliptic Curve Diffie-Hellman (ECDH)" bezeichnet. Wie dem Fachmann bekannt ist, sind bei der Kryptographie mittels elliptischer Kurven die Addition "+" von Punkten einer elliptischen Kurve und die Multiplikation "*" mit Zahlen definiert. Punkte einer elliptischen Kurve, die hier als bestimmte Punkte einer elliptischen Kurve auch als Basis- oder Gruppenelement bzw. Basis bezeichnet werden können, wie z.B. der öffentliche PKC oder das Basiselement J, werden in der vorliegenden Beschreibung und in den Figuren durch Großbuchstaben gekennzeichnet, während Zahlen, wie beispielsweise die Geheimnisse s und t, durch Kleinbuchstaben gekennzeichnet werden. Für weitere Details zur Kryptographie mittels elliptischer Kurven wird beispielhaft auf das Buch "Elliptic Curve Public Key Cryptosystems", A. Menezes, Kluwer Academic Publishers, 1993 verwiesen.

Bei der Bereitstellung des öffentlichen Schlüssels PKC des portablen Datenträgers 20 in Schritt S1a von Figur 2 sollte sichergestellt sein, dass nur der Hersteller bzw. Herausgeber des portablen Datenträgers 20 den diskreten Logarithmus von G2 zu der Basis G1 kennt, z.B. G2 = G1*u. Dies bedeutet, dass lediglich der Hersteller bzw. der Herausgeber des portablen Datenträgers 20 eine solche Darstellung berechnen kann. Um die diskret-logarithmische Darstellung zu bestimmen, kann der Hersteller bzw. Herausgeber des portablen Datenträgers 20 beispielsweise die folgenden Schritte durchführen: Zunächst erzeugt er eine Zufallszahl x und berechnet damit den Gruppenschlüssel PKC=G1*x. Anschließend erzeugt er eine Zufallszahl t und berechnet s=x-t*u. Als geheimer bzw. privater Schlüssel für den an das RI-Protokoll angelehnten Teil des erfindungsgemäßen Verfahrens kann beispielsweise s oder t dieser Darstellung gewählt werden.

Für die nachstehend beschriebene bevorzugte Ausführungsform der Erfindung wird s als der geheime RI-Schlüssel gewählt. Das nachstehend beschriebene erfindungsgemäße Protokoll zur Diffie-Hellman-Schlüsselvereinbarung führt die folgenden Beweise durch: einen Kenntnisbeweis einer diskret-logarithmischen Darstellung PKC = G1*s+G2*t sowie einen Beweis, dass für das RI-Pseudonym K gilt: K=J*s.

Wie bereits vorstehend im Zusammenhang mit Schritt S1a von Figur 2 erwähnt, verfügt der portable Datenträger 20 über den öffentlichen Schlüssel PKC ("public key card") und die geheimen Schlüssel s und t, die über die folgende diskret-logarithmische Darstellung in Beziehung miteinander stehen: PKC=G1*s+G2*t. Wie ebenfalls bereits vorstehend beschrieben, können die Gruppenelemente G1 und G2 beispielsweise vom Hersteller bei der Herstellung oder vom Herausgeber des portablen Datenträgers 20, auf diesem sicher hinterlegt worden sein.

Unter weiterer Bezugnahme auf Figur 2, werden nachstehend die gemäß einer bevorzugten Ausführungsform der Erfindung durchgeführten Schritte bei der Kommunikation zwischen dem portablen Datenträger 20 und dem Terminal 10 beschrieben. In einem Schritt S2b von Figur 2 erzeugt das Terminal 10 zwei Zufallszahlen r1 und r2 und berechnet daraus zwei abgeleitete Gruppenelemente H1 und H2, wobei H1=(G1*r1+J)*r2 und H2=G2*r1*r2 gilt. In Schritt S3b von Figur 2 sendet das Terminal 10 sein RI-Basiselement J sowie H1 und H2 an den portablen Datenträger 20.

Im Schritt S2a von Figur 2 berechnet der portable Datenträger 20 das RI-Pseudonym K mit K=J*s. Anschließend sendet der portable Datenträger 20 in Schritt S3a von Figur 2 das berechnete RI-Pseudonym K sowie seinen öffentlichen Schlüssel PKC an das Terminal 10. Der Fachmann wird jedoch erkennen, dass der öffentliche Schlüssel PKC auch zu einem früheren Zeitpunkt bereits dem Terminal 10 übermittelt werden kann, z.B. vor der Ausführung des hier beschriebenen Protokolls.

Im Schritt S4a und S4b von Figur 2 berechnen sowohl der portable Datenträger 20 als auch das Terminal 10 das gemeinsame Geheimnis bzw. den gemeinsamen Schlüssel, nämlich Z=H1*s+H2*t=(PKC*r1+K)*r2=Z. Mittels des so vereinbarten Schlüssels kann ein sicherer Kommunikationskanal zwischen dem portablen Datenträger 20 und dem Terminal 10 ausgebildet werden.

Gemäß einer weiteren bevorzugten Ausführungsform kann das soeben beschriebene Verfahren folgendermaßen verbessert werden, und zwar für Anwendungsfälle, bei denen es als nicht akzeptabel erachtet wird, dass das RI-Pseudonym K im Klartext vom portablen Datenträger 20 an das Terminal 10 übertragen wird und somit im Prinzip abgehört werden kann. In einem solchen Fall wird gemäß einer bevorzugten Ausführungsform der Erfindung das Pseudonym K maskiert, vorzugsweise indem es mit einer Zufallszahl multipliziert wird. Das entsprechende erfindungsmäße Protokoll wird nachstehend unter Bezugnahme auf Figur 3 erläutert.

Da die Schritte S1a', S1b', S2b' und S3b' von Figur 3 identisch zu den entsprechenden Schritten von Figur 2 sind, kann auf die vorstehende Beschreibung dieser Schritte verwiesen werden.

In Schritt S2a' von Figur 3 erzeugt der portable Datenträger 20 eine Zufallszahl r3 und berechnet des gemeinsame Geheimnis Z=H1*s*r3+H2*t*r3. Das gemeinsame Geheimnis Z kann jedoch auch erst zu einem späteren Zeitpunkt vom portablen Datenträger 20 berechnet werden.

Um das Pseudonym K zu verschleiern, berechnet der portable Datenträger 20 das verschleierte Pseudonym K' mit K'=J*s*r3. Ferner berechnet der portable Datenträger 20 den verschleierten öffentlichen Schlüssel P'=PKC*r. Mittels des gemeinsamen Geheimnisses Z oder eines daraus abgeleiteten Schlüssels verschlüsselt der portable Datenträger 20 die Zufallszahl r3, d.h. <r3>=ENC(r3, Z), wobei ENC(x, K) eine geeignete Verschlüsselungsfunktion des Datenelements x mit dem Schlüssel K ist. In Schritt S3a' von Figur 3 sendet der portable Datenträger 20 P', K', PKC und die verschlüsselte Zufallszahl r3, d.h. <r3>, an das Terminal 10.

In Schritt S4b' von Figur 3 berechnet das Terminal 10 anhand von P' und K' das gemeinsame Geheimnis Z=(P'*r1+K')*r2. Mittels des gemeinsamen Geheimnisses Z oder eines daraus abgeleiteten Schlüssels entschlüsselt das Terminal 10 die verschlüsselte Zufallszahl <r3>, d.h. r3=DEC(<r3>, Z), wobei DEC(x, K) eine geeignete Entschlüsselungsfunktion des Datenelements x mit dem Schlüssel K ist (in der Regel handelt es sich bei der Entschlüsselungsfunktion DEC(x, K) um die inverse Funktion der Verschlüsselungsfunktion ENC(x, K)). Sodann überprüft das Terminal 10, ob P'=PKC*r3 gilt, und berechnet, falls dem so ist, das Pseudonym K gemäß K=K'*r3$^{-1}$.

Der Fachmann wird erkennen, dass bei der bevorzugten Ausführungsform von Figur 3 der portable Datenträger 20 und das Terminal 10 ein gemeinsames Geheimnis Z vereinbaren, wobei der portable Datenträger 20 ein verschleiertes Pseudonym K' an das Terminal 10 überträgt, aus dem das Terminal 10 das eigentliche Pseudonym K= K'*r3$^{-1}$ berechnen kann.

Für den Fall, dass es einem Angreifer gelingen sollte, an den privaten Schlüssel eines portablen Datenträgers zu kommen, der zu der Gruppe gehört, der auch der portable Datenträger 20 angehört, ist es dem Angreifer nicht möglich, das Pseudonym des portablen Datenträgers 10 abzuleiten. Falls es dem Angreifer jedoch gelingen sollte, an die privaten Schlüssel von zwei portablen Datenträgern einer Gruppe zu gelangen, dann kann der Angreifer den diskreten Logarithmus von G2 zur Basis G1 folgendermaßen berechnen: Aus PKC= G1*s+G2*t =G1*s'+G2*t' folgt, dass G2=G1*(s-s')*(t-t')$^{-1}$, woraus wiederum folgt, dass u=G2/G1=(s-s')*(t-t')$^{-1}$. Mit dem so berechneten u kann der Angreifer beliebige diskretlogarithmische Darstellungen zum öffentlichen Schlüssel PKC berechnen, was bedeutet, dass der Angreifer gefälschte Pseudonyme erzeugen kann. Ohne das Wissen der genauen diskret-logarithmischen Darstellung zum öffentlichen Schlüssel PKC eines nicht geknackten portablen Datenträgers kann ein Angreifer jedoch nicht das Pseudonym eines solchen Datenträgers erzeugen.

Um auch diese Möglichkeit zu unterbinden, kann gemäß bevorzugter Ausführungsformen der Erfindung der folgende Ansatz unter Verwendung einer "Whitelist" bzw. Positivliste Anwendung finden. Das Terminal 10 umfasst eine Positivliste mit den Pseudonymen K aller echten portablen Datenträger hinsichtlich eines RI-Basiselements J. Falls das Pseudonym eines Datenträgers in der Whitelist auftaucht, dann ist der portable Datenträger 20 bisher nicht widerrufen worden, so dass mit diesem portablen Datenträger 20 erfindungsgemäß kommuniziert werden kann. Andernfalls, d.h. falls das Pseudonym eines portablen Datenträgers in der Whitelist auftaucht, sollte die Kommunikation mit diesem portablen Datenträger abgebrochen werden.

Nachstehend wird kurz ein Sicherheitsbeweis des erfindungsgemäßen Verfahrens von Figur 2 skizziert. Der Sicherheitsbeweis basiert auf den zwei folgenden Annahmen bzw. Vermutungen sowie auf dem "Binding Theorem".

1. Vermutung: Sind Q1, Q2 und Y gegeben, dann ist es schwierig s und t zu berechnen.

2. Vermutung: Sind Q1, Q2 und Y sowie eine Zufallszahl r gegeben, dann muss, um Y*r aus Q1*r und Q2*r, jedoch ohne das Wissen von r zu berechnen, eine DLREP von Y hinsichtlich der Basen Q1 und Q2 bekannt sein, d.h. Y=Q1*s+Q2*t.

"Binding Theorem": Nach der Durchführung des erfindungsgemäßen Verfahrens von Figur 2 kann das Terminal 10 sicher sein, dass a) der portable Datenträger 20 eine diskret-logarithmische Darstellung von PKC=G1*s+G2*t kennt und b) K=J*s gilt.

Geht man davon aus, dass der portable Datenträger 20 und das Terminal 10 das gleiche gemeinsame Geheimnis Z berechnet haben, dann impliziert das DLREP-DH-Problem, wenn dieses auf Y=PKC*r+K, Q1=G1*r+J und Q2=G2*r angewandt wird, dass der portable Datenträger 20 eine diskret-logarithmische Darstellung (DLREP) von PKC*r+K zu den Basen G1*r+J und G2*r kennen muss, d.h.

$$PKC*r+K=(G1*r+J)*s+G2*r*t \qquad (1)$$

Da r vom Terminal 10 zufällig gewählt worden ist, muss der portable Datenträger 20 ebenso eine Darstellung mit demselben K und den anderen Basen Q1'=G1*r'+J und Q2'=G2*r' kennen, d.h.

$$PKC*r´+K=(G1*r´+J)*s´+G2*r´*t´ \qquad (2)$$

Zunächst wird gezeigt, dass, falls s≠s' oder t≠t', der portable Datenträger 20, der Herausgeber des portablen Datenträgers 20 und das Terminal 10 zusammen ein schweres diskret-logarithmisches Problem lösen können. Sei J so gewählt, dass der diskrete Logarithmus von J zu der Basis G1 vollkommen unbekannt ist. Subtrahiert man Gleichung (2) von Gleichung (1) so erhält man:

$$PKC*(r-r´)=G1*(r*s-r´*s´)+G2*(r*t-r´*t´)+J*(s-s´) \qquad (3)$$

Der Herausgeber des portablen Datenträgers 20 kennt eine diskret-logarithmische Darstellung von PKC, z.B. PKC=G1*s"+G2*t". Der Herausgeber kennt ferner den diskreten Logarithmus von G2 zu der Basis G1, z.B. G2=G1*u. Hiermit lässt sich Gleichung (3) folgendermaßen schreiben:

$$J=G1*((r*s-r´*s´)*(s´´*(r-r´))^{(-1)}+u*(r*t-r´*t´)*(t´´*(r-r´))^{(-1)}) \qquad (4)$$

Dies bedeutet jedoch, dass der diskrete Logarithmus von J zur Basis G1 berechnet werden kann, was den vorstehend gemachten Annahmen widerspricht. Es folgt, dass s=s'und t=t' gelten muss. Subtrahiert man Gleichung (2) von Gleichung (1) unter dieser Vorgabe, so erhält man:

$$PKC*(r-r´)=G1*(r-r´)*s+G2*(r-r´)*t \qquad (5)$$

Teilt man diese Gleichung durch (r-r'), so erkennt man, dass die Werte s und t ebenso als eine gültige diskret-logarithmische Darstellung für PKC zu den Basen G1 und G2 verwendet werden können. Ersetzt man diese Darstellung von PKC in Gleichung (1), so erhält man unmittelbar, dass K=J*s gilt.

Der Fachmann wird erkennen, dass obgleich vorstehend bevorzugte Ausführungsformen der Erfindung im Rahmen von Varianten einer DH-Schlüsselvereinbarung mittels elliptischer Kurven beschrieben worden ist, die Erfindung ebenfalls im Rahmen eines allgemeinen DH-Verfahrens eingesetzt werden kann, das nicht auf elliptischen Kurven basiert.

**Patentansprüche**

1. Verfahren zum pseudonymen Vereinbaren eines Schlüssels Z zwischen einem Datenträger(20) und einem Terminal (10), wobei auf dem Terminal (10) ein Basiselement J sowie zwei Gruppenelemente G1 und G2 vorliegen, wobei das Basiselement J und die zwei Gruppenelemente G1 und G2 Punkte einer elliptischen Kurve sind, und auf dem portablen Datenträger (20) ein öffentlicher Schlüssel PKC und die Geheimnisse s und t vorliegen, wobei u der diskrete Logarithmus von G2 zu der Basis G1 ist, d.h. G2=G1*u, und wobei der öffentliche Schlüssel PKC, wobei es sich bei dem öffentlichen Schlüssel PKC insbesondere um einen Gruppenschlüssel handelt, eine aus den zwei Geheimnissen s und t und den zwei Gruppenelementen G1 und G2 ausgebildete diskret-logarithmische Darstellung ist, d.h. PKC = G1*s+G2 *t, wobei das Verfahren auf dem portablen Datenträger (20) die folgenden Schritte umfasst:

das Empfangen des Basiselements J und eines ersten abgeleiteten Basiselements H1 und eines zweiten abgeleiteten Basiselements H2 vom Terminal (10), wobei mittels einer ersten Zufallszahl r1 und einer zweiten Zufallszahl r2 das erste abgeleitete Basiselement H1 aus dem Basiselement J und dem Gruppenelement G1 abgeleitet ist und das zweite abgeleitete Basiselement H2 aus dem Gruppenelement G2 abgeleitet ist;
das Berechnen eines Pseudonyms K mittels des vom Terminal (10) übertragenen Basiselements J und des Geheimnisses s;
das Senden des öffentlichen Schlüssels PKC und des Pseudonyms K an das Terminal (10); und

das Berechnen eines gemeinsamen Geheimnisses Z mittels der abgeleiteten Basiselemente H1 und H2 und der Geheimnisse s und t, wobei als Schlüssel zwischen dem portablen Datenträger (20) und dem Terminal (10) das gemeinsame Geheimnis Z oder ein daraus abgeleiteter Schlüssel verwendet wird.

2. Verfahren nach Anspruch 1, wobei das gemeinsame Geheimnis Z berechnet wird, indem Z=H1*s+H2*t berechnet wird.

3. Verfahren zum pseudonymen Vereinbaren eines Schlüssels Z zwischen einem portablen Datenträger(20) und einem Terminal (10), wobei auf dem Terminal (10) ein Basiselement J sowie zwei Gruppenelemente G1 und G2 vorliegen, wobei das Basiselement J und die zwei Gruppenelemente G1 und G2 Punkte einer elliptischen Kurve sind, und auf dem portablen Datenträger (20) ein öffentlicher Schlüssel PKC und die Geheimnisse s und t vorliegen, wobei u der diskrete Logarithmus von G2 zu der Basis G1 ist, d.h. G2=G1*u, und wobei der öffentliche Schlüssel PKC, wobei es sich bei dem öffentlichen Schlüssel PKC insbesondere um einen Gruppenschlüssel handelt, eine aus den zwei Geheimnissen s und t und den zwei Gruppenelementen G1 und G2 ausgebildete diskret-logarithmische Darstellung ist, d.h. PKC = G1*s+G2 *t, wobei das Verfahren auf dem Terminal (10) die folgenden Schritte umfasst:

das Erzeugen einer ersten Zufallszahl r1 und einer zweiten Zufallszahl r2;
das Ableiten eines ersten abgeleiteten Basiselements H1 und eines zweiten abgeleiteten Basiselements H2, wobei mittels der ersten Zufallszahl r1 und der zweiten Zufallszahl r2 das erste abgeleitete Basiselement H1 aus dem Basiselement J und dem Gruppenelement G1 abgeleitet wird und das zweite abgeleitete Basiselement H2 aus dem Gruppenelement G2 abgeleitet wird;
das Senden des Basiselements J, des ersten abgeleiteten Basiselements H1 und des zweiten abgeleiteten Basiselements H2 an den portablen Datenträger (20);
das Empfangen des öffentlichen Schlüssels PKC und eines Pseudonyms K des portablen Datenträgers (20), wobei das Pseudonym K aus dem Basiselement J und dem Geheimnis s gebildet ist; und
das Berechnen eines gemeinsamen Geheimnisses Z mittels des öffentlichen Schlüssels PKC, der ersten Zufallszahl r1, dem Pseudonym K und der zweiten Zufallszahl r2, wobei als Schlüssel zwischen dem portablen Datenträger (20) und dem Terminal (10) das gemeinsame Geheimnis Z oder ein daraus abgeleiteter Schlüssel verwendet wird.

4. Verfahren nach Anspruch 3, wobei das gemeinsame Geheimnis Z berechnet wird, indem Z=(PKC*r1+K)*r2 berechnet wird.

5. Verfahren nach Anspruch 3 oder 4, wobei auf dem Terminal (10) eine Positivliste mit dem Pseudonymen aller echten portablen Datenträger (20) hinsichtlich des Basiselements J hinterlegt ist.

6. Verfahren nach einem der vorhergehenden Ansprüche, wobei das erste abgeleitete Basiselement H1 abgleitet wird, indem H1=(G1*r1+J)*r2 berechnet wird, und das zweite abgeleitete Basiselement H2 abgeleitet wird, indem H2=G2*r1*r2 berechnet wird.

7. Verfahren nach einem der vorhergehenden Ansprüche, wobei das Pseudonym K berechnet wird, indem K=J*s berechnet wird.

8. Verfahren nach Anspruch 7, wobei vom portablen Datenträger (20) ein verschleiertes Pseudonym K' berechnet und an das Terminal (10) gesendet wird.

9. Verfahren nach Anspruch 8, wobei für das verschleierte Pseudonym K' gilt K'=K*r3, wobei r3 eine Zufallszahl ist.

10. Portabler Datenträger (20), der dazu ausgestaltet ist, ein Verfahren gemäß Anspruch 1, 2 oder 6 bis 9 durchzuführen.

11. Portabler Datenträger (20) nach Anspruch 10, wobei es sich bei dem portablen Datenträger um ein Sicherheitsdokument handelt.

12. Terminal (10), das dazu ausgestaltet ist, ein Verfahren gemäß Anspruch 3 bis 9 durchzuführen.

**Claims**

1.  A method for pseudonymously agreeing on a key Z between a data carrier (20) and a terminal (10), wherein on the terminal (10) a base element J as well as two group elements G1 and G2 are present, wherein the base element J and the two group elements G1 and G2 are points of an elliptical curve, and on the portable data carrier (20) a public key PKC and the secrets s and t are present, wherein u is the discrete logarithm of G2 to the base G1, i.e. G2=G1*u, and wherein the public key PKC, wherein the public key PKC is in particular a group key, is a discrete-logarithm representation formed from the two secrets s and t and the two group elements G1 and G2, i.e. PKC = G1*s+G2*t, wherein the method on the portable data carrier (20) comprises the following steps:

    receiving the base element J and a first derived base element H1 and a second derived base element H2 from the terminal (10), wherein by means of a first random number r1 and a second random number r2 the first derived base element H1 is derived from the base element J and the group element G1, and the second derived base element H2 is derived from the group element G2;
    computing a pseudonym K by means of the base element J transferred from the terminal (10) and the secret s;
    sending the public key PKC and the pseudonym K to the terminal (10); and
    computing a common secret Z by means of the derived base elements H1 and H2 and the secrets s and t, wherein as a key between the portable data carrier (20) and the terminal (10) the common secret Z or a key derived therefrom is employed.

2.  The method according to claim 1, wherein the common secret Z is computed by computing Z=H1*s+H2*t.

3.  A method for pseudonymously agreeing on a key Z between a portable data carrier (20) and a terminal (10), wherein on the terminal (10) a base element J as well as two group elements G1 and G2 are present, wherein the base element J and the two group elements G1 and G2 are points of an elliptical curve, and on the portable data carrier (20) a public key PKC and the secrets s and t are present, wherein u is the discrete logarithm of G2 to the base G1, i.e. G2=G1*u, and wherein the public key PKC, wherein the public key PKC is in particular a group key, is a discrete-logarithm representation formed from the two secrets s and t and the two group elements G1 and G2, i.e. PKC = G1*s+G2*t, wherein the method on the terminal (10) comprises the following steps:

    generating a first random number r1 and a second random number r2;
    deriving a first derived base element H1 and a second derived base element H2, wherein by means of the first random number r1 and the second random number r2 the first derived base element H1 is derived from the base element J and the group element G1, and the second derived base element H2 is derived from the group element G2;
    sending the base element J, the first derived base element H1 and the second derived base element H2 to the portable data carrier (20);
    receiving the public key PKC and a pseudonym K of the portable data carrier (20), wherein the pseudonym K is formed from the base element J and the secret s; and
    computing a common secret Z by means of the public key PKC, the first random number r1, the pseudonym K and the second random number r2, wherein as a key between the portable data carrier (20) and the terminal (10) the common secret Z or a key derived therefrom is employed.

4.  The method according to claim 3, wherein the common secret Z is computed by computing Z=(PKC*r1+K)*r2.

5.  The method according to claim 3 or 4, wherein a positive list of the pseudonyms of all authentic portable data carriers (20) with regard to the base element J is deposited on the terminal (10).

6.  The method according to any of the preceding claims, wherein the first derived base element H1 is derived by computing H1 = (G1*r1+J)*r2, and the second derived base element H2 is derived by computing H2=G2*r1*r2.

7.  The method according to any of the preceding claims, wherein the pseudonym K is computed by computing K=J*s.

8.  The method according to claim 7, wherein an obfuscated pseudonym K' is computed by the portable data carrier (20) and sent to the terminal (10).

9.  The method according to claim 8, wherein for the obfuscated pseudonym K' it holds that K' =K*r3, wherein r3 is a random number.

**10.** A portable data carrier (20), which is configured for carrying out a method according to claims 1, 2 or 6 to 9.

**11.** The portable data carrier (20) according to claim 10, wherein the portable data carrier is a security document.

**12.** A terminal (10), which is configured for carrying out a method according to claims 3 to 9.

**Revendications**

**1.** Procédé de convention pseudonyme concernant une clé Z entre un support de données (20) et un terminal (10), cependant que, sur le terminal (10), il y a un élément de base J ainsi que deux éléments de groupe G1 et G2, cependant que l'élément de base J et les deux éléments de groupe G1 et G2 sont des points d'une courbe elliptique, et que, sur le support de données (20) portable, il y a une clé publique PKC et les deux secrets s et t, cependant que u est le logarithme discret de G2 en base G1, c-à-d. que G2=G1*u, et cependant que la clé publique PKC, la clé publique PKC consistant en l'occurrence en particulier en une clé de groupe, est une représentation logarithmique discrète formée à partir des deux secrets s et t et des deux éléments de groupe G1 et G2, c-à-d. que PKC = G1*s+G2*t, cependant que le procédé comprend sur le support de données (20) portable les étapes suivantes :

la réception de l'élément de base J et d'un premier élément de base H1 dérivé et d'un deuxième élément de base H2 dérivé, du terminal (10), cependant que, au moyen d'un premier nombre aléatoire r1 et d'un deuxième nombre aléatoire r2, le premier élément de base H1 dérivé est dérivé à partir de l'élément de base J et de l'élément de groupe G1, et le deuxième élément de base H2 dérivé est dérivé à partir de l'élément de groupe G2 ;
le calcul d'un pseudonyme K au moyen de l'élément de base J transmis par le terminal (10) et du secret s ;
l'envoi de la clé publique PKC et du pseudonyme K au terminal (10) ; et
le calcul d'un secret commun Z au moyen des éléments de base H1 et H2 dérivés et des secrets s et t, cependant que, en tant que clé entre le support de données (20) portable et le terminal (10), le secret commun Z ou une clé en étant dérivée est utilisé.

**2.** Procédé selon la revendication 1, cependant que le secret commun Z est calculé en ce que Z=H1*s+H2*t.

**3.** Procédé de convention pseudonyme concernant une clé Z entre un support de données (20) portable et un terminal (10), cependant que, sur le terminal (10), il y a un élément de base J ainsi que deux éléments de groupe G1 et G2, cependant que l'élément de base J et les deux éléments de groupe G1 et G2 sont des points d'une courbe elliptique, et que, sur le support de données (20) portable, il y a une clé publique PKC et les secrets s et t, cependant que u est le logarithme discret de G2 en base G1, c-à-d. que G2=G1*u, et cependant que la clé publique PKC, la clé publique PKC consistant en l'occurrence en particulier en une clé de groupe, est une représentation logarithmique discrète formée à partir des deux secrets s et t et des deux éléments de groupe G1 et G2, c-à-d. que PKC = G1*s+G2*t, cependant que le procédé comprend sur le terminal (10) les étapes suivantes :

la génération d'un premier nombre aléatoire r1 et d'un deuxième nombre aléatoire r2 ;
la dérivation d'un premier élément de base H1 dérivé et d'un deuxième élément de base H2 dérivé, cependant que, au moyen du premier nombre aléatoire r1 et du deuxième nombre aléatoire r2, le premier élément de base H1 dérivé est dérivé à partir de l'élément de base J et de l'élément de groupe G1, et le deuxième élément de base H2 dérivé est dérivé à partir de l'élément de groupe G2 ;
l'envoi de l'élément de base J, du premier élément de base H1 dérivé et du deuxième élément de base H2 dérivé au support de données (20) portable ;
la réception de la clé publique PKC et d'un pseudonyme K du support de données (20) portable, cependant que le pseudonyme K est constitué de l'élément de base J et du secret s ; et
le calcul d'un secret commun Z au moyen de la clé publique PKC, du premier nombre aléatoire r1, du pseudonyme K et du deuxième nombre aléatoire r2, cependant que, en tant que clé entre le support de données (20) portable et le terminal (10), le secret commun Z ou une clé en étant dérivée est utilisé.

**4.** Procédé selon la revendication 3, cependant que le secret commun Z est calculé en ce que Z=(PCK*r1+K)*r2.

**5.** Procédé selon la revendication 3 ou 4, cependant que, sur le terminal (10), une liste positive comprenant le pseudonyme de tous les supports de données (20) portables authentiques relativement à l'élément de base J est enregistrée.

**6.** Procédé selon une des revendications précédentes, cependant que le premier élément de base H1 dérivé est dérivé en ce que H1=(G1*r1+J)*r2 est calculé, et que le deuxième élément de base H2 dérivé est dérivé en ce que H2=G2*r1*r2 est calculé.

**7.** Procédé selon une des revendications précédentes, cependant que le pseudonyme K est calculé en ce que K=J*s est calculé.

**8.** Procédé selon la revendication 7, cependant que, par le support de données (20) portable, un pseudonyme K' masqué est calculé et envoyé au terminal (10).

**9.** Procédé selon la revendication 8, cependant que, pour le pseudonyme K' masqué, il est établi que K'=K*r3, cependant que r3 est un nombre aléatoire.

**10.** Support de données portable (20) conçu pour exécuter un procédé selon les revendications 1, 2 ou 6 à 9.

**11.** Support de données portable (20) selon la revendication 10, cependant que le support de données portable consiste en un document de sécurité.

**12.** Terminal (10) conçu pour exécuter un procédé selon les revendications 3 à 9.

**10**

**12**

**20**

**23**

RAM

**24**

CPU

NVM

**22**

**21**

**Fig. 1**

**10**

**20**

S1a

| PKC, s, t |
|---|

S1b

| J |
|---|

S2b

| Erzeuge r1, r2<br>H1=(G1*r1+J)*r2<br>H2=G2*r1*r2 |
|---|

| J, H1, H2 |
|---|

S3b

S2a

| K=J*s |
|---|

S3a

| PKC, K |
|---|

S4a

| Z=H1*s+H2*t |
|---|

S4b

| Z=(PKC*r1+K)*r2 |
|---|

# Fig. 2

**10**

**20**

S1a′

| PKC, s, t |
|:---:|

S1b′

| J |
|:---:|

S2b′

| Erzeuge r1, r2<br>H1=(G1*r1+J)*r2<br>H2=G2*r1*r2 |
|:---:|

| J, H1, H2 |
|:---:|

S3b′

S2a′

| Erzeuge r3<br>Z=H1*s*r3+H2*t*r3<br>K′=J*s*r3<br>P′=PKC*r3<br><r3>=ENC(r3, Z) |
|:---:|

S3a′

| P′, K′, PKC,<br><r3> |
|:---:|

S4b′

| Z=(P′*r1+K′)*r2<br>r3=DEC(<r3>, Z)<br>Prüfe: PKC*r3=P′?<br>K=K′*r3^(-1) |
|:---:|

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Elliptic Curve Public Key Cryptosystems. **A. MENEZES.** Kluwer Academic Publishers. 1993